# EUROPEAN PATENT SPECIFICATION

(11) **EP 1 095 507 B1**
(45) Date of publication and mention of the grant of the patent: **11.04.2012**
(21) Application number: 00938618.6
(22) Date of filing: 27.04.2000
(51) Int. Cl.: H04N 5/222

(54) **GATHERING AND EDITING INFORMATION WITH A CAMERA**
SAMMELN UND EDITIEREN VON INFORMATIONEN MIT EINER KAMERA
COLLECTE ET EDITION D'INFORMATIONS AU MOYEN D'UNE CAMERA

(30) Priority: 07.05.1999 EP 99201423
(43) Date of publication of application: 02.05.2001
(73) Proprietor: Thomson Licensing SA, 92130 Issy-les-Moulineaux (FR)
(72) Inventor: VAN ROOY, Johannes, H., J., M., NL-5656 AA Eindhoven (NL)
(74) Representative: Rossmanith, Manfred
(86) International application number: PCT/EP2000/003804
(87) International publication number: WO 2000/069168

(56) References cited:
- EP-B- 0 702 832
- WO-A-97/09818
- GB-A- 2 226 218
- US-A- 5 568 205
- FASCIANO P: "CAMCUTTER - PICTURES DIRECT FROM LENS TO DISK" IMAGE TECHNOLOGY (JOURNAL OF THE BKSTS),GB,BRITISH KINEMATOGRAPH SOUND AND TELEVISION SOCIETY. LONDON, vol. 78, no. 9, 1 October 1996 (1996-10-01), pages 16-18,20, XP000628350 ISSN: 0950-2114

## Description

The invention relates to a method for gathering information with a camera. The invention further relates to a camera system.

A method for gathering information with a camera and a camera system are known in the art and are used to gather information for example news, sport events, etc.

Nowadays a cameraman makes recordings with his camera of the news, the sport event, etc. and when he has finished the recordings he"brings"the recorded information on a tape, a disc or whatever to a studio room. In the studio room an operator selects parts of the recorded information to be used in a news bulletin, a sport bulletin, etc.

Further the use of a satellite during gathering information with a (professional) camera is known whereby beforehand a satellite communication link has to be requested and installed before the cameraman can make the recordings. Via the satellite the information is sent to the studio room where the operator can select the information to be used.

The known methods and known camera systems have disadvantages because in case the cameraman makes the recordings and brings the recorded information to the studio room the operator does not know what has been recorded till he receives this information.

Further when a satellite link is used the disadvantage is that the cost are high and there is no possibility of recording spontaneously events because the satellite link has to be requested beforehand. A further disadvantage of using the satellite link is that no influence on the received information.

In WO 97/09817 a high speed high resolution digital camera is described, which sends two digital picture streams. One stream is the high definition picture which is compressed and stored on the hard drive array or other digital storage. The second stream is the low resolution digital picture stream that is time coded to match the frames of the high definition picture. The picture stream produced by the camera is then edited and monitored on the basis of the low resolution picture stream. The edited information is sent back to the digital storage such that unneeded scenes can be eliminated resulting in an efficient use of the storage system.

In GB-A 2 226 218 an apparatus and a method for transmitting stored digital audio signals is disclosed, which is conceived to accelerate the editing of digital audio data. This is achieved by first transferring the active recording stored e.g. on hard disc drives in a lower quality form allowing the user to proceed with editing work. Subsequently one or more further transfers improve the quality of the recording until full quality is attained.

An object of the invention is to overcome the disadvantages of the prior art and to obtain a method and a camera system which are more flexible. To this end a first aspect of the invention provides a method for gathering information as defined in Claim 1.

By using communication means (for example satellite, internet etc.) between the camera and the studio room and by sending the information with a low resolution together with a time code to the studio room it is possible for the operator in the studio room to select with the time code the part (s) of the recorded information (in the camera) to be sent to the studio room at a higher resolution. That is, that part of the recorded information to be broadcasted. In this way the operator in the studio room is able to select that part of the information he wants to use for a news bulletin, sport bulletin, etc.

For example a telephone connection link can be used as communication means.

A second aspect of the invention provides a camera system as defined in Claim 3.

The camera system comprises a camera with storing means. Further in this camera system the recorded information is at first send with a low resolution to the studio room. By storing the information, later on the operator can select, and or edit parts of the recorded information to be sent to the studio room at higher resolution.

Preferably the storing means are random access storing means to obtain a quick access to the stored information.

Embodiments of the invention are described in the dependent Claims.

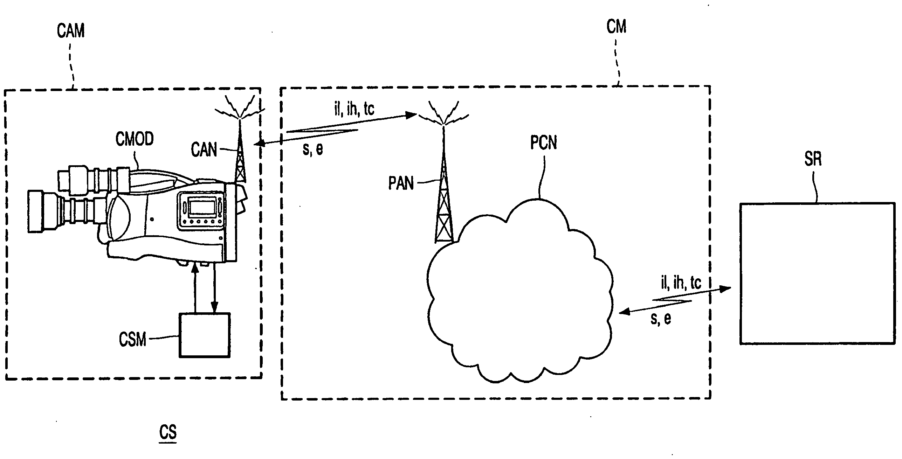

The invention and additional features, which may optimally be used to implement invention to advantage, will be apparent from and elucidated with reference to the examples described below hereinafter and shown in the Figure. Herein shows:
The figure schematically an example of a camera system according to the invention.

The figure shows schematically an example of a camera system CS according to the invention. The camera system comprises a camera CAM, communication means CM and a studio room SR.

The camera CAM comprises a camera module CMOD for recording the information. Further the camera comprises storing means CSM for storing the recorded information, for example on random access storing means. The camera further comprises an antenna CAN for sending information il, ih and a time code tc via the communication means CM to the studio room SR.

The information to be sent can for example first be encoded using the MPEG coding.

For example the antenna CAN can be an antenna of a wireless telephone connection.

With the antenna CAN the information il, ih is sent to an antenna PAN of the communication means, which comprises in this example a public wireless telephone network PCN. The public wireless telephone network is coupled to the studio room SR for receiving the information il, ih.

At first the camera sends the information at low resolution il, together with the time code tc to the studio room.

This information at low resolution can for example be at teleconferencing quality. An operator can select what part of the received information he/she wants to use, and/or to edit. The operator sends back via the communication means a signal s (select) and/or a signal e (edit), in these select and/or edit signals the received time code is used to indicate the part of the recorded information. This/these signal(s) are received by the antenna CAN of the camera CAM. After receiving these signals the camera will send the selected and/or edited information at high-resolution ih via the communication means CM to the studio room SR. In this way it is possible to send only that information (at high resolution) to the studio room that is really used in the studio room, which makes it possible to use this method/camera system even if the bitrate of the communication means is not very high.

Using the above described method / camera system it is possible really to determine what information is broadcasted. For example it is possible to send back to the camera and the camera man instructions to repeat some shoots, or even to interview persons for the camera with the questions coming from someone in the studio room.

The studio room can also be a room in a truck for example, with a wireless telephone connection with the camera.

The quality of the real-time information with low resolution mainly depends on the bitrate of the communication means.

The invention has been described on the basis of an example. The man skilled in the art will be well aware of a lot of variations falling within the scope of the invention.

The speed of sending the selected information with a high-resolution ih depends on the highest possible bitrate of the communication means.

It is to be noticed that the communication means can for example be satellite or internet or any other appropriate communication means.

Further instead of sending the information with a time code it is also possible to send the information with so called "meta data" to make for example an edit decision list.

## Claims

1. Method for gathering video data comprising the Steps of:
- recording video data with a camera (CAM) and storing the video data on storing means (CSM),
- sending video data with a low resolution together with a time code via communication means to a studio room (SR),
- selecting in the studio room (SR) at least one part of the received video data to be handled further,
- sending back a signal (s) to the camera indicating which part or which parts of the recorded video data has to be sent to the studio room at a higher resolution,
- sending an edit signal (e) to the camera for editing the video data in the camera (CAM), and
- sending the edited part of the recorded video data from the camera (CAM) to the studio room (SR) via the communication means (CM).

2. Camera system (CS) comprising a studio room (SR), a camera (CAM) for recording video data, storing the video data on storing means (CSM), the camera (CAM) comprises sending means (CAN) for sending the video data with a low resolution together with a time code via communication means (CM) to the studio room (SR) for receiving the video data with a low resolution together with the time code, wherein the studio room (SR) comprises selecting means for selecting at least one part of the video data received to be handled further, means for sending back a signal (s, e) via the communication means (CM) to the camera (CAM) indicating which part(s) of the stored video data has to be sent to the studio room (SR) at a higher resolution, and wherein the camera (CAM) uses the sending means (CAN) for sending the selected part of the stored video data to the studio room (SR) via the communication means (CM).

3. A camera system according to Claim 2, **characterized in that** the storing means (CSM) are random access storing means.

## Patentansprüche

1. Verfahren zum Sammeln von Videodaten, wobei das Verfahren die folgenden Schritte umfasst:
- Aufzeichnen von videodaten mit einer Kamera (CAM) und Speichern der Daten auf Speichermitteln (CSM),
- Senden von Videodaten mit einer niedrigen Auflösung zusammen mit einem Zeitcode über Kommunikationsmittel an ein Aufnahmestudio (SR),
- Auswählen mindestens eines Teils der empfangenen Videodaten, die weiter zu behandeln sind, in dem Aufnahmestudio (SR),
- Zurücksenden eines Signals (s) an die Kamera, das angibt, welcher Teil oder welche Teile der aufgezeichneten Videodaten mit einer höheren Auflösung an das Aufnahmestudio gesendet werden soll beziehungsweise sollen,
- Senden eines Bearbeitungssignals (e) an die Kamera zum Bearbeiten der Videodaten in der Kamera (CAM), und
- Senden des bearbeiteten Teils der aufgezeichneten videodaten von der Kamera (CAM) über die Kommunikationsmittel (CM) an das Aufnahmestudio (SR).

2. Kamerasystem (CS), das ein Aufnahmestudio (SR), eine Kamera (CAM) zum Aufzeichnen von Videodaten, zum Speichern der Videodaten in Speichermitteln (CSM) umfasst, wobei die Kamera (CAM) Sendemittel (CAN) zum Senden der Videodaten mit einer niedrigen Auflösung zusammen mit einem Zeitcode über Kommunikationsmittel (CM) an das Aufnahmestudio (SR) zum Empfangen der Videodaten mit einer niedrigen Auflösung zusammen mit dem Zeitcode umfasst, wobei das Aufnahmestudio (SR) Auswahlmittel zum Auswählen mindestens eines Teils der empfangenen Videodaten, die weiter behandelt werden sollen, Mittel zum Zurücksenden eines Signals (s, e), das angibt, welcher Teil (welche Teile) der gespeicherten Videodaten mit einer höheren Auflösung an das Aufnahmestudio (SR) gesendet werden sollen, über die Kommunikationsmittel (CM) an die Kamera (CAM) umfasst, und wobei die Kamera (CAM) die Sendemittel (CAN) zum Senden des ausgewählten Teils der gespeicherten Videodaten über die Kommunikationsmittel (CM) an das Aufnahmestudio (SR) verwendet.

3. Kamerasystem nach Anspruch 2, **dadurch gekennzeichnet, dass** die Speichermittel (CSM) Schreib-Lese-Speichermittel sind.

## Revendications

1. Procédé permettant la collecte de données vidéo comprenant les étapes :
- d'enregistrement de données vidéo avec une caméra (CAM) et de stockage des données vidéo sur des moyens de stockage (CSM),
- d'envoi de données vidéo faible résolution avec un code temporel via des moyens de communication une salle d'étude (SR),
- de sélection dans la salle d'étude (SR) d'au moins une partie des données vidéo reçues devant être traitées ultérieurement,
- de renvoi d'un signal (s) à la caméra indiquant quelle partie des données vidéo enregistrées doit être envoyée ou quelles parties des données vidéo enregistrées doivent être envoyées dans la salle d'étude avec une résolution supérieure,
- d'envoi d'un signal d'édition (e) à la caméra pour l'édition des données vidéo dans la caméra (CAM), et
- d'envoi de la partie éditée des données vidéo enregistrées depuis la caméra (CAM) à la salle d'étude (SR) via des moyens de communication (CM).

2. Système de caméra (CS) comprenant une salle d'étude (SR), une caméra (CAM) permettant l'enregistrement de données vidéo, le stockage de données vidéo sur des moyens de stockage (CSM), la caméra (CAM) comprenant des moyens d'envoi (CAN) permettant l'envoi de données vidéo de faible résolution avec un code temporel via des moyens de communication (CM)à la salle d'étude (SR) permettant la réception de données vidéo faible résolution avec le code temporel, dans lequel la salle d'étude (SR) comprenant des moyens de sélection permettant la sélection d'au moins une partie des données vidéo reçues devant être ultérieurement traitées, moyens
permettant le renvoi d'un signal (s, e) via les moyens de communication (CM) à la caméra (CAM) indiquant quelle(s) partie(s)des données de vidéo stockées doi(ven)t être envoyée(s) à la salle d'étude (SR) avec une résolution supérieure, et dans lequel la caméra (CAM) utilise les moyens d'envoi (CAN) pour envoyer la partie sélectionnée des données vidéo stockées à la salle d'étude (SR) via les moyens de communication (CM).

3. Système de caméra selon la revendication 2, **caractérisé en ce que** les moyens de stockage (CSM) sont des moyens de stockage à accès aléatoire.
